(19) Europäisches Patentamt
European Patent Office
Office européen des brevets

(11) **EP 3 115 259 A1**

(12) **EUROPEAN PATENT APPLICATION**
published in accordance with Art. 153(4) EPC

(43) Date of publication:
**11.01.2017 Bulletin 2017/02**

(21) Application number: **15758201.6**

(22) Date of filing: **20.02.2015**

(51) Int Cl.:
***B60R 1/072*** (2006.01)

(86) International application number:
**PCT/JP2015/054850**

(87) International publication number:
**WO 2015/133300 (11.09.2015 Gazette 2015/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.03.2014 JP 2014041900**

(71) Applicant: **Kabushiki Kaisha Tokai Rika Denki
Seisakusho
Ohguchi-cho
Niwa-gun
Aichi 480-0195 (JP)**

(72) Inventor: **MIYAZAKI, Shinichi
Niwa-gun
Aichi 480-0195 (JP)**

(74) Representative: **TBK
Bavariaring 4-6
80336 München (DE)**

(54) **VEHICLE MIRROR DEVICE**

(57) In a vehicle door mirror device, an up/down motor and a right/left motor each have one terminal sharing a common electrical connection to a driver circuit, and the up/down motor and the right/left motor are driven so that a mirror is tilted. Here, a straight line parallel to the vehicle rightward and leftward direction and passing through the tilting center of the mirror passes through the position where the mirror is actuated by the right/left motor, and a straight line parallel to the upward and downward direction and passing through the tilting center of the mirror does not pass through the position where the mirror is actuated by the up/down motor. For this reason, changes in the tilting speed of the mirror caused by changes in the tilting direction of the mirror can be controlled.

FIG.2

## Description

Technical Field

The present invention relates to a vehicle mirror device that tilts a mirror disposed in a vehicle.

Background Art

In the outside mirror disclosed in JP-A No. 2000-127853, the mirror is tilted in a rightward and leftward direction as a result of a right/left driving motor having a voltage applied to it, and the mirror is tilted in an upward and downward direction as a result of an up/down driving motor having a voltage applied to it. Moreover, the mirror is tilted in diagonal directions with respect to the rightward and leftward direction and the upward and downward direction as a result of the right/left driving motor and the up/down driving motor having voltages simultaneously applied to them.

In this connection, in this outside mirror, the right/left driving motor and the up/down driving motor are electrically connected separately from each other.

Here, if the right/left driving motor and the up/down driving motor were to each have one electrical connection shared in common, it is generally assumed that depending on the tilting direction of the mirror the right/left driving motor and the up/down driving motor would have high voltages simultaneously applied to them and the right/left driving motor and the up/down driving motor would have low voltages simultaneously applied to them. For this reason, when the tilting direction of the mirror is changed, the tilting speed of the mirror is greatly changed.

SUMMARY OF INVENTION

Technical Problem

In view of the circumstances described above, it is an object of the present invention to obtain a vehicle mirror device with which changes in the tilting speed of the mirror caused by changes in the tilting direction of the mirror can be controlled even in a case where a pair of driving means each have one electrical connection shared in common.

Solution to Problem

A vehicle mirror device of a first aspect of the present invention comprises: a mirror disposed in a vehicle; a pair of driving means, each having one electrical connection shared in common, wherein, when at least one of the pair of driving means has a voltage applied to it and is driven, the mirror is tilted in at least one of one direction or another direction, the one direction and the other direction being mutually orthogonal, and an angle of a mirror surface of the mirror is adjusted, with a position where the mirror is actuated by one of the pair of driving means being made to oppose a straight line parallel to the one direction and passing through a tilting center of the mirror and with a position where the mirror is actuated by the other of the pair of driving means being made to not oppose a straight line parallel to the other direction and passing through the tilting center of the mirror; and control means that can control voltages applied to the pair of driving means.

In the vehicle mirror device of the first aspect of the present invention, at least one of the pair of driving means has a voltage applied to it and is driven so that the mirror is tilted in at least one of the one direction or the other direction, the one direction and the other direction being mutually orthogonal, and the angle of the mirror surface of the mirror is adjusted. Moreover, the control means can control the voltages applied to the pair of driving means.

Furthermore, the pair of driving means each have one electrical connection shared in common.

Here, the position where the mirror is actuated by one driving means is made to oppose the straight line parallel to the one direction and passing through the tilting center of the mirror, and the position where the mirror is actuated by the other driving means is made to not oppose the straight line parallel to the other direction and passing through the tilting center of the mirror. For this reason, the tilting speed of the mirror can be kept from being increased when the pair of driving means have a high voltage applied to them, the tilting speed of the mirror can be kept from being reduced when the pair of driving means have a low voltage applied to them, and changes in the tilting speed of the mirror caused by changes in the tilting direction of the mirror can be controlled.

A vehicle mirror device of a second aspect of the present invention is the vehicle mirror device of the first aspect of the present invention, wherein a tilting speed of the mirror when the control means applies a maximum voltage to the pair of driving means and the tilting speed of the mirror when the control means applies a minimum voltage to the pair of driving means are the same.

In the vehicle mirror device of the second aspect of the present invention, the tilting speed of the mirror when the control means applies the maximum voltage to the pair of driving means and the tilting speed of the mirror when the control means applies the minimum voltage to the pair of driving means are the same. For this reason, changes in the tilting speed of the mirror caused by changes in the tilting direction of the mirror can be effectively controlled.

A vehicle mirror device of a third aspect of the present invention is the vehicle mirror device of the first aspect or the second aspect of the present invention, wherein tilting speeds of the mirror in all directions in which the mirror is tilted are the same.

In the vehicle mirror device of the third aspect of the present invention, the tilting speeds of the mirror in all the directions in which the mirror is tilted are the same. For this reason, changes in the tilting speed of the mirror caused by changes in the tilting direction of the mirror can be prevented.

BRIEF DESCRIPTION OF DRAWINGS

FIG. 1 is a front view, seen from a vehicle rear side, showing a vehicle door mirror device pertaining to an embodiment of the present invention.
FIG. 2 is a sectional view (a sectional view along line 2-2 of FIG. 1), seen from the vehicle left side, showing main portions of the vehicle door mirror device pertaining to the embodiment of the present invention.
FIG. 3 is a block diagram showing main portions of the vehicle door mirror device pertaining to the embodiment of the present invention.
FIG. 4 is a chart showing the relationship between tilting directions of a mirror and potentials output to lines in the vehicle door mirror device pertaining to the embodiment of the present invention.
FIG. 5 is a vector diagram showing the relationship between tilting directions of the mirror and tilting speeds of the mirror in the vehicle door mirror device pertaining to the embodiment of the present invention.

DESCRIPTION OF EMBODIMENT

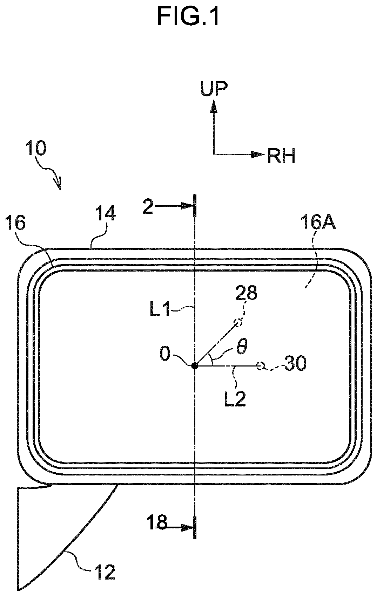

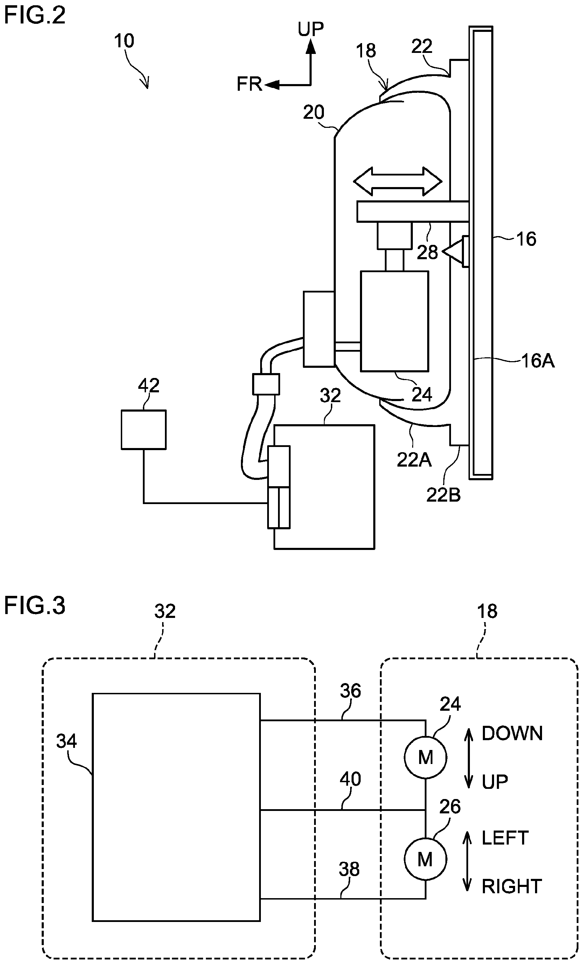

In FIG. 1 a vehicle door mirror device 10 pertaining to an embodiment to which the vehicle mirror device of the present invention has been applied is shown by way of a front view seen from the vehicle rear side, and in FIG. 2 main portions of the vehicle door mirror device 10 are shown by way of a sectional view (a sectional view along line 2-2 of FIG. 1) seen from the vehicle left side (inside in the vehicle width direction). It should be noted that, in the drawings, arrow FR indicates the vehicle forward direction, arrow RH indicates the vehicle rightward direction (outward in the vehicle width direction), and arrow UP indicates the upward direction.

As shown in FIG. 1, the vehicle door mirror device 10 pertaining to the present embodiment is equipped with a stay 12 serving as an installation member, and the stay 12 is secured to the outside of the front end of the upward and downward direction middle portion of a door (a front door, a vehicle body side) of the vehicle; thus the vehicle door mirror device 10 is installed on the door. The stay 12 supports, on its upper side, a substantially cuboid container-shaped visor 14 serving as a housing member, and the inside of the visor 14 opens in the vehicle rearward direction.

A substantially rectangular plate-shaped mirror 16 is disposed inside the visor 14, and the mirror 16 is placed in the open section of the visor 14. The obverse surface of a reflection film in the reverse side section (the vehicle front side section) of the mirror 16 is a mirror surface 16A, and the mirror surface 16A faces the vehicle rearward direction. This allows an occupant (particularly a driver) of the vehicle to see in the vehicle rearward direction by means of the mirror 16 (the mirror surface 16A).

Inside the visor 14 is disposed an electrically powered mirror surface adjustment unit 18 (a mirror surface angle adjustment device) serving as a tilting mechanism shown in FIG. 2.

A substantially hemispherical container-shaped case 20 is disposed in the vehicle front side section of the mirror surface adjustment unit 18, and the inside of the case 20 opens in the vehicle rearward direction. The case 20 is supported in the visor 14, and because of this the mirror surface adjustment unit 18 is supported in the visor 14.

A tilting body 22 is disposed in the vehicle rear side section of the mirror surface adjustment unit 18, and the tilting body 22 is tiltably (swingably, turnably) held in the case 20. A substantially round tube-shaped sliding tube 22A is disposed in the tilting body 22, with the diameter of the sliding tube 22A gradually becoming smaller heading in the vehicle forward direction and the sliding tube 22A being slidable with respect to the peripheral wall of the case 20. A substantially disc-shaped attachment plate 22B is integrally disposed on the vehicle rear side end of the sliding tube 22A, and the mirror 16 is detachably attached to the vehicle rear side of the attachment plate 22B. Because of this, the mirror 16 is tiltable about the position of its center of gravity (the position of the surface center of the mirror surface 16A) with respect to the case 20 integrally with the tilting body 22.

As shown in FIG. 1 to FIG. 3, inside the case 20 are secured an up/down motor 24 and a right/left motor 26 serving as driving means (motors), and an up/down rod 28 and a right/left rod 30 that are rod-shaped and serve as actuating members are connected via gear mechanisms (not shown in the drawings) to the up/down motor 24 and the right/left motor 26, respectively. The up/down rod 28 and the right/left rod 30 are held so as to be slidable (movable) in the vehicle forward and rearward direction (axial direction) inside the case 20, with the distal end (vehicle rear side end) of the up/down rod 28 being turnably held on the attachment plate 22B on the upper side (may also be the lower side) of a tilting center O (position of the center of gravity) of the mirror 16, and with the distal end (vehicle rear side end) of the right/left rod 30 being turnably held on the attachment plate 22B on the vehicle right side (vehicle width direction outside, may also be the vehicle left side (vehicle width direction inside)) of the tilting center O of the mirror 16.

A straight line passing through the distal end of the up/down rod 28 and the tilting center O of the mirror 16 slopes an angle θ with respect to the vehicle rightward and leftward direction (one direction), and the distal end of the up/down rod 28 does not have passing through it a straight line L1 parallel to the upward and downward direction (other direction) and passing through the tilting center O of the mirror 16 (the distal end of the up/down rod 28 is made to not oppose the straight line L1 in the vehicle forward and rearward direction). A straight line passing through the distal end of the right/left rod 30 and the tilting center O of the mirror 16 is parallel to the vehicle rightward and leftward direction, and the distal end of the right/left rod 30 has passing through it a straight line L2 parallel to the vehicle rightward and leftward direction and passing through the tilting center O of the mirror 16 (the distal end of the right/left rod 30 is made to oppose the straight line L2 in the vehicle forward and rearward direction). Furthermore, the distance between the distal end of the up/down rod 28 and the tilting center O of the mirror 16 and the distance between the distal end of the right/left rod 30 and the tilting center O of the mirror 16 are identical.

The up/down motor 24 and the right/left motor 26 are electrically connected to an ECU 32 (a mirror ECU) serving as control means inside the visor 14 or on the vehicle body side, and a driver circuit 34 is disposed in the ECU 32. One terminal of the up/down motor 24 is electrically connected to the driver circuit 34 by an up/down line 36 (harness), one terminal of the right/left motor 26 is electrically connected to the driver circuit 34 by a right/left line 38 (harness), and the other terminal of the up/down motor 24 and the other terminal of the right/left motor 26 are electrically connected to the driver circuit 34 by a common line 40 (harness) so that they share a common electrical connection to the driver circuit 34. Three half-bridge circuits (not shown in the drawings) are disposed in the driver circuit 34, and the half-bridge circuits are electrically connected between the up/down line 36 and the common line 40, between the common line 40 and the right/left line 38, and between the up/down line 36 and the right/left line 38.

The driver circuit 34 can, by the control of the ECU 32, output a high potential (in the present embodiment, 12 V), a low potential (in the present embodiment, 0 V), or an intermediate potential (in the present embodiment, 6 V, which is 1/2 of the high potential) to the up/down line 36, the common line 40, and the right/left line 38; the driver circuit 34 outputs the high potential as a result of a Hi-side driver being switched on, outputs the low potential as a result of a Lo-side driver being switched on, and generates and outputs the intermediate potential by means of pulse width modulation (PWM) control or a step-down circuit. When the potentials are output from the driver circuit 34 to the up/down line 36, the common line 40, and the right/left line 38 and a voltage is applied to at least one of the up/down motor 24 or the right/left motor 26, the mirror surface adjustment unit 18 is actuated and at least one of the up/down motor 24 or the right/left motor 26 is driven. Because of this, at least one of the up/down rod 28 or the right/left rod 30 is slid (actuated) in the vehicle forward and rearward direction and the tilting body 22 and the mirror 16 are tilted with respect to the case 20 so that the angle of the mirror surface 16A of the mirror 16 (the direction that the mirror surface 16A faces) is adjusted.

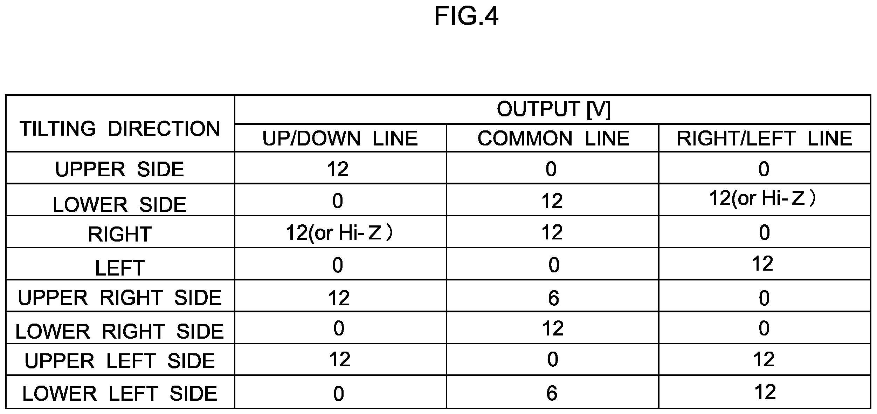

As shown in FIG. 1 to FIG. 5, when the high potential, the low potential, and the low potential have been output from the driver circuit 34 to the up/down line 36, the common line 40, and the right/left line 38, respectively, a high voltage in the positive direction (in the present embodiment, 12 V) is applied to the up/down motor 24 and the up/down rod 28 is slid in the vehicle forward direction so that the mirror 16 is tilted in an upward side direction A1 (an upward-facing side direction) and the mirror surface 16A of the mirror 16 is tilted in the upward-facing side direction.

When the low potential, the high potential, and the high potential (may also be a Hi-Z state) have been output from the driver circuit 34 to the up/down line 36, the common line 40, and the right/left line 38, respectively, a high voltage in the reverse direction is applied to the up/down motor 24 and the up/down rod 28 is slid in the vehicle rearward direction so that the mirror 16 is tilted in a downward side direction A2 (a downward-facing side direction) and the mirror surface 16A of the mirror 16 is tilted in the downward-facing side direction.

When the high potential (may also be a Hi-Z state), the high potential, and the low potential have been output from the driver circuit 34 to the up/down line 36, the common line 40, and the right/left line 38, respectively, a high voltage in the positive direction is applied to the right/left motor 26 and the right/left rod 30 is slid in the vehicle forward direction so that the mirror 16 is tilted in a rightward direction A3 (a rightward-facing direction) and the mirror surface 16A of the mirror 16 is tilted in the rightward-facing direction of the vehicle.

When the low potential, the low potential, and the high potential have been output from the driver circuit 34 to the up/down line 36, the common line 40, and the right/left line 38, respectively, a high voltage in the reverse direction is applied to the right/left motor 26 and the right/left rod 30 is slid in the vehicle rearward direction so that the mirror 16 is tilted in a left direction A4 (a leftward-facing direction) and the mirror surface 16A of the mirror 16 is tilted in the leftward-facing direction of the vehicle.

When the high potential, the intermediate potential, and the low potential have been output from the driver circuit 34 to the up/down line 36, the common line 40, and the right/left line 38, respectively, a low voltage in the positive direction (in the present embodiment, 6 V) is applied to the up/down motor 24 and the right/left motor 26 and the up/down rod 28 and the right/left rod 30 are slid in the vehicle forward direction so that the mirror 16 is tilted in an upper right side direction B1 (an upper right-facing side direction) and the mirror surface 16A of the mirror 16 is tilted in the upper right-facing side direction of the vehicle.

When the low potential, the high potential, and the low potential have been output from the driver circuit 34 to the up/down line 36, the common line 40, and the right/left line 38, respectively, a high voltage in the reverse direction and a high voltage in the positive direction are applied to the up/down motor 24 and the right/left motor 26, respectively, and the up/down rod 28 and the right/left rod 30 are slid in the vehicle rearward direction and the vehicle forward direction, respectively, so that the mirror 16 is tilted in a lower right side direction B2 (a lower right-facing side direction) and the mirror surface 16A of the mirror 16 is titled in the lower right-facing side direction of the vehicle.

When the high potential, the low potential, and the high potential have been output from the driver circuit 34 to the up/down line 36, the common line 40, and the right/left line 38, respectively, a high voltage in the positive direction and a high voltage in the reverse direction are applied to the up/down motor 24 and the right/left motor 26, respectively, and the up/down rod 28 and the right/left rod 30 are slid in the vehicle forward direction and the vehicle rearward direction, respectively, so that the mirror 16 is tilted in an upper left side direction B3 (an upper left-facing side direction) and the mirror surface 16A of the mirror 16 is tilted in the upper left-facing side direction of the vehicle.

When the low potential, the intermediate potential, and the high potential have been output from the driver circuit 34 to the up/down line 36, the common line 40, and the right/left line 38, respectively, a low voltage in the reverse direction is applied to the up/down motor 24 and the right/left motor 26 and the up/down rod 28 and the right/left rod 30 are slid in the vehicle rearward direction so that the mirror 16 is tilted in a lower left side direction B4 (a lower left-facing side direction) and the mirror surface 16A of the mirror 16 is tilted in the lower left-facing side direction of the vehicle.

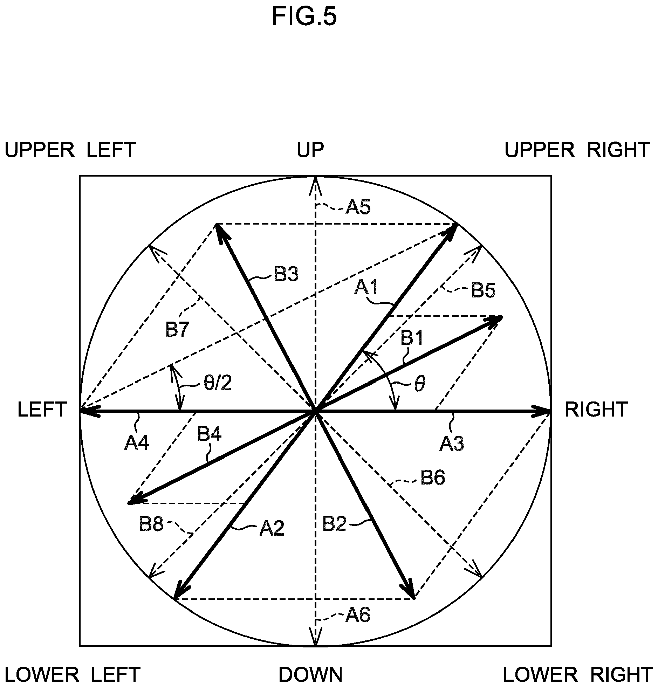

As shown in FIG. 5, the tilting speed of the mirror 16 in the upward side direction A1, the tilting speed of the mirror 16 in the downward side direction A2, the tilting speed of the mirror 16 in the rightward direction A3, and the tilting speed of the mirror 16 in the leftward direction A4 are identical, and the angle between the upward side direction A1 and the rightward direction A3 and the angle between the downward side direction A2 and the leftward direction A4 are the above-described angle $\theta$.

Moreover, in the present embodiment, the tilting speed of the mirror 16 in the upper right side direction B1, the tilting speed of the mirror 16 in the lower right side direction B2, the tilting speed of the mirror 16 in the upper left side direction B3, and the tilting speed of the mirror 16 in the lower left side direction B4 are identical.

For this reason, for example, B1 = $2 \times (A3/2)\cos(\theta/2)$, B3 = $2 \times A4\sin(\theta/2)$, and B1 = B3, so

$$2 \times (A3/2)\cos(\theta/2) = 2 \times A4\sin(\theta/2)$$

and A3 = A4, so

$$\tan(\theta/2) = 1/2.$$

Because of this,

$$\tan\theta = 2 \times \{\tan(\theta/2)\}/[1 - \{\tan(\theta/2)\}^2]$$

so

$$\tan\theta = 3/4$$

and $\theta$ is substantially 53°.

An adjustment operation device 42 (a switch) serving as operating means in the vehicle is electrically connected to the ECU 32, and the adjustment operation device 42 allows the occupant to perform an upper side operation, a lower side operation, a right operation, a left operation, an upper right side operation, a lower right side operation, an upper left side operation, and a lower left side operation. When the upper side operation, the lower side operation, the right operation, the left operation, the upper right side operation, the lower right side operation, the upper left side operation, and the lower left side operation have been performed via the adjustment operation device 42, the mirror surface adjustment unit 18 is actuated and the mirror 16 is tilted in the upward side direction A1, the downward side direction A2, the rightward direction A3, the leftward direction A4, the upper right side direction B1, the lower right side direction B2, the upper left side direction B3, and the lower left side direction B4, respectively, by the control of the ECU 32. Furthermore, the ECU 32 can automatically actuate the mirror surface adjustment unit 18 at a predetermined chance to tilt the mirror 16 in the upward side direction A1, the downward side direction A2, the rightward direction A3, the leftward direction A4, the upper right side direction B1, the lower right side direction B2, the upper left side direction B3, and the lower left side direction B4.

Next, the action of the present embodiment will be described.

In the vehicle door mirror device 10 having the configuration described above, the mirror surface adjustment unit 18 is actuated and the potentials are output from the driver circuit 34 to the up/down line 36, the common line 40, and the right/left line 38 by the control of the ECU 32 so that a voltage is applied to at least one of the up/down motor 24 or the right/left motor 26 and at least one of the up/down motor 24 or the right/left motor 26 is driven. For this reason, at least one of the up/down rod 28 or the right/left rod 30 is slid in the vehicle forward and rearward direction and the tilting body 22 and the mirror 16 are tilted with respect to the case 20 so that the angle of the mirror surface 16A of the mirror 16 is adjusted and the occupant's viewing range provided by the mirror 16 is adjusted.

Here, the straight line L2 parallel to the vehicle rightward and leftward direction and passing through the tilting center O of the mirror 16 passes through the position where the mirror 16 is actuated by the right/left motor 26 (the position of the distal end of the right/left rod 30), and the straight line L1 parallel to the upward and downward direction and passing through the tilting center O of the mirror 16 does not pass through the position where the mirror 16 is actuated by the up/down motor 24 (the position of the distal end of the up/down rod 28). For this reason, when the up/down motor 24 and the right/left motor 26 have the high voltage (maximum voltage) simultaneously applied to them and the mirror 16 is tilted in the lower right side direction B2 and the upper left side direction B3, the tilting speed at which the mirror 16 is tilted in the upward and downward direction by the up/down motor 24 is reduced and the tilting speed of the mirror 16 can be kept from being increased. Moreover, when the up/down motor 24 and the right/left motor 26 have the low voltage (minimum voltage) simultaneously applied to them and the mirror 16 is tilted in the upper right side direction B1 and the lower left side direction B4, the mirror 16 is tilted in the rightward and leftward direction also by the up/down motor 24 and the tilting speed of the mirror 16 can be kept from being reduced. Because of this, changes in the tilting speed of the mirror 16 caused by changes in the tilting direction of the mirror 16 can be controlled, and the operation of tilting the mirror 16 by means of the adjustment operation device 42 can be easily performed.

Moreover, the tilting speed of the mirror 16 when the up/down motor 24 and the right/left motor 26 have the high voltage (maximum voltage) simultaneously applied to them and the mirror 16 is tilted in the lower right side direction B2 and the upper left side direction B3 and the tilting speed of the mirror 16 when the up/down motor 24 and the right/left motor 26 have the low voltage (minimum voltage) simultaneously applied to them and the mirror 16 is tilted in the upper right side direction B1 and the lower left side direction B4 are identical. For this reason, changes in the tilting speed of the mirror 16 caused by changes in the tilting direction of the mirror 16 can be effectively controlled and the operation of tilting the mirror 16 by means of the adjustment operation device 42 can be effectively and easily performed.

It should be noted that, in the present embodiment, the mirror 16 is tiltable in the upward side direction A1, the downward side direction A2, the rightward direction A3, the leftward direction A4, the upper right side direction B1, the lower right side direction B2, the upper left side direction B3, and the lower left side direction B4. However, by adjusting the potentials that are output by the control of the ECU 32 from the driver circuit 34 to the up/down line 36, the common line 40, and the right/left line 38, the mirror 16 may also be made tiltable in an upward direction A5 (an upward-facing direction), a downward direction A6 (a downward-facing direction), the rightward direction A3, the leftward direction A4, an upper right direction B5 (an upper right-facing direction), a lower right direction B6 (a lower right-facing direction), an upper left direction B7 (an upper left-facing direction), and a lower left direction B8 (a lower left-facing direction), and the mirror 16 may also be made tiltable in all directions.

In this case, the adjustment operation device 42 allows the occupant to perform an up operation, a down operation, a right operation, a left operation, an upper right operation, a lower right operation, an upper left operation, and a lower left operation, and the adjustment operation device 42 is, for example, a so-called joystick switch and allows the occupant to perform operations in all directions.

Moreover, in this case, by adjusting the potentials that are output by the control of the ECU 32 from the driver circuit 34 to the up/down line 36, the common line 40, and the right/left line 38, the tilting speeds of the mirror 16 in all the directions in which the mirror 16 is tilted may be made identical (e.g., 0.8 times the tilting speed of the mirror 16 in the rightward direction A3 and the leftward direction A4 in the present embodiment). Because of this, changes in the tilting speed of the mirror 16 caused by changes in the tilting direction of the mirror 16 can be prevented, and the operation of tilting the mirror 16 by means of the adjustment operation device 42 can be performed even more effectively and easily.

Furthermore, in the present embodiment, the straight line L2 parallel to the vehicle rightward and leftward direction and passing through the tilting center O of the mirror 16 passes through the position where the mirror 16 is actuated by the right/left motor 26 (the position of the distal end of the right/left rod 30) and the straight line L1 parallel to the upward and downward direction and passing through the tilting center O of the mirror 16 does not pass through the position where the mirror 16 is actuated by the up/down motor 24 (the position of the distal end of the up/down rod 28). However, it is also alright if the straight line L2 parallel to the vehicle rightward and leftward direction and passing through the tilting center O of the mirror 16 does not pass through the position where the mirror 16 is actuated by the right/left motor 26 (the position of the distal end of the right/left rod 30) and the straight line L1 parallel to the upward and downward direction and passing through the tilting center O of the mirror 16 passes through the position where the mirror 16 is actuated by the up/down motor 24 (the position of the distal end of the up/down rod 28).

Moreover, in the present embodiment, the present invention is applied to the vehicle door mirror device 10. However, the present invention may also be applied to other car exterior and car interior mirror devices.

The disclosure of Japanese Patent Application No. 2014-41900 filed on March 4, 2014, is incorporated in its entirety by reference herein.

Reference Signs List

| | |
|---|---|
| 10 | Vehicle Door Mirror Device (Vehicle Mirror Device) |
| 16 | Mirror |
| 16A | Mirror Surface |
| 24 | Up/Down Motor |
| 26 | Right/Left Motor |
| 32 | ECU (Control Means) |
| L1 | Straight Line |
| L2 | Straight Line |

**Claims**

1. A vehicle mirror device comprising:

   a mirror disposed in a vehicle;
   a pair of driving means, each having one electrical connection shared in common, wherein, when at least one of the pair of driving means has a voltage applied to it and is driven, the mirror is tilted in at least one of one direction or another direction, the one direction and the other direction being mutually orthogonal, and an angle of a mirror surface of the mirror is adjusted, with a position where the mirror is actuated by one of the pair of driving means being made to oppose a straight line parallel to the one direction and passing through a tilting center of the mirror and with a position where the mirror is actuated by the other of the pair of driving means being made to not oppose a straight line parallel to the other direction and passing through the tilting center of the mirror; and
   control means that can control voltages applied to the pair of driving means.

2. The vehicle mirror device according to claim 1, wherein a tilting speed of the mirror when the control means applies a maximum voltage to the pair of driving means and the tilting speed of the mirror when the control means applies a minimum voltage to the pair of driving means are the same.

3. The vehicle mirror device according to claim 1 or claim 2, wherein tilting speeds of the mirror in all directions in which the mirror is tilted are the same.

# FIG.1

FIG.2

10

UP

FR

18    22

20

16

28

16A

42

32

24

22A

22B

FIG.3

32                                      18

34        36        24

            DOWN

            UP

40        26

            LEFT

38        RIGHT

## FIG.4

| TILTING DIRECTION | OUTPUT [V] | | |
|---|---|---|---|
| | UP/DOWN LINE | COMMON LINE | RIGHT/LEFT LINE |
| UPPER SIDE | 12 | 0 | 0 |
| LOWER SIDE | 0 | 12 | 12(or Hi-Z) |
| RIGHT | 12(or Hi-Z) | 12 | 0 |
| LEFT | 0 | 0 | 12 |
| UPPER RIGHT SIDE | 12 | 6 | 0 |
| LOWER RIGHT SIDE | 0 | 12 | 0 |
| UPPER LEFT SIDE | 12 | 0 | 12 |
| LOWER LEFT SIDE | 0 | 6 | 12 |

EP 3 115 259 A1

# FIG.5

UPPER LEFT UP UPPER RIGHT

LEFT RIGHT

LOWER LEFT DOWN LOWER RIGHT

## INTERNATIONAL SEARCH REPORT

| | International application No. |
|---|---|
| | PCT/JP2015/054850 |

**A.  CLASSIFICATION OF SUBJECT MATTER**
*B60R1/072(2006.01)i*

According to International Patent Classification (IPC) or to both national classification and IPC

**B.  FIELDS SEARCHED**

Minimum documentation searched (classification system followed by classification symbols)
B60R1/072

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2012-6555 A  (Murakami Corp.), 12 January 2012 (12.01.2012), paragraphs [0011], [0015]; fig. 1 (Family: none) | 1-3 |
| A | JP 2001-524412 A  (IKU Holding Montfoort B.V.), 04 December 2001 (04.12.2001), entire text & US 6276807 B1             & WO 1999/028154 A1 & EP 1035988 A1             & DE 69804009 T2 & NL 1007676 C2             & AU 1511799 A & PL 340771 A1 | 1-3 |

☐  Further documents are listed in the continuation of Box C.            ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered  to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 April 2015 (14.04.15) | 28 April 2015 (28.04.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000127853 A

- JP 2014041900 A